(19) Europäisches Patentamt
European Patent Office
Office européen des brevets

(11) EP 3 730 547 A1

(12) EUROPEAN PATENT APPLICATION
published in accordance with Art. 153(4) EPC

(43) Date of publication:
**28.10.2020 Bulletin 2020/44**

(21) Application number: **18892838.6**

(22) Date of filing: **25.09.2018**

(51) Int Cl.:
***C08L 7/00*** *(2006.01)* ***B60C 1/00*** *(2006.01)*
***C08K 5/3462*** *(2006.01)* ***C08L 9/00*** *(2006.01)*

(86) International application number:
**PCT/JP2018/035402**

(87) International publication number:
**WO 2019/123749 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2017 JP 2017244354**

(71) Applicant: **Bridgestone Corporation**
**Chuo-Ku**
**Tokyo 104-8340 (JP)**

(72) Inventors:
- **HAYAKAWA, Kotaro**
  **Tokyo 104-8340 (JP)**
- **YANOI, Yuzaburo**
  **Tokyo 104-8340 (JP)**
- **KONISHI, Motoi**
  **Wakayama-shi, Wakayama 640-8580 (JP)**

(74) Representative: **Oxley, Robin John George**
**Marks & Clerk LLP**
**15 Fetter Lane**
**London EC4A 1BW (GB)**

# (54) RUBBER COMPOSITION

(57) An object of the present invention is to provide a rubber composition which, when used for tires, can improve on-ice performance of tires. The rubber composition of the invention contains a compound represented by the following formula (I), a dienic rubber and a liquid softener, wherein the mixing ratio (by mass) of the liquid softener to the compound represented by the formula (I) is 4.5/1 to 11/1. In the formula (I), $R^1$ represents a divalent hydrocarbon group having 1 or more and 20 or less carbon atoms. $R^2$ and $R^3$ each independently represent a hydrogen atom or a hydrocarbon group having 1 or more and 6 or less carbon atoms. X represents a hydrogen atom, or a group represented by $R^4$-COO-, $R^4$-CONH- or $R^4$-O-, and $R^4$ represents a hydrocarbon group having 1 or more and 20 or less carbon atoms.

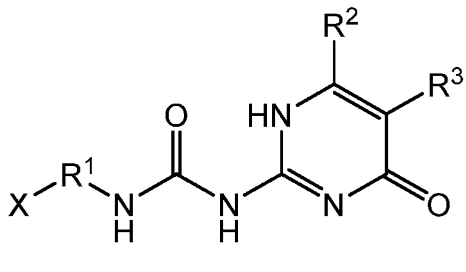

(I)

EP 3 730 547 A1

## Description

### Technical Field

The present invention relates to a rubber composition.

### Background Art

Rubber is an amorphous and soft polymer substance and, especially in many cases, indicates a material which consists primarily of an organic polymer such as a natural rubber or a synthetic rubber and which has a high elastic limit and a low elastic modulus, that is, elastic rubber. Utilizing the properties, a composition containing rubber (rubber composition) is used in various fields of tires, sealing materials and quakeproof vibration-isolating materials.

For example, in tires for vehicles, rubber elasticity of rubber plays a role in absorbing shocks which occur when vehicles run on an uneven road for enhancing ride comfort and for buffering shocks to vehicles themselves. In addition, rubber is hardly permeable to water and air, and can therefore tightly keep air inside tires to resist rain and snow. Further, rubber has a large frictional force, and therefore the frictional force of tires in contact with a road is large so that power and braking force can be rapidly transmitted onto the surface of a road to secure non-slipperiness.

Effectively utilizing such properties of rubber, various additives are added to rubber for the purpose of attaining further more favorable performance.

A typical additive is sulfur, and by crosslinking rubber molecules to each other by adding sulfur thereto, the resultant rubber can come to express remarkably characteristics as a rubber elastic body. Crosslinking of rubber molecules to each other by such a sulfur atom is to bond them via a covalent bond, and is not broken easily, and is therefore called permanent crosslinking.

On the other hand, by introducing a hydrogen bond-forming site into a rubber molecular chain, crosslinking can be formed by bonding the introduced sites to each other via a hydrogen bond. Such crosslinking is to bond rubber molecules to each other via a hydrogen bond, and can be readily desorbed by switching such as strain inputting or temperature change, and is therefore called non-permanent crosslinking. As a method for introducing a hydrogen bond-forming site into a rubber molecular chain, there is known a method of chemically modifying a rubber molecular chain or a method of grafting it. By combining such different crosslinking modes, materials whose properties are changed depending on the intended purpose can be produced.

For example, PTL 1 relates to an elastomer material containing a flexible polymer chain as combined with a covalent bond-having permanent crosslinking bridge and a noncovalent bond-having crosslinking bridge between the chains, and discloses that the crosslinking bridge contains an association group with a basis of a nitrogen-containing hetero ring.

PTL 2 discloses a modified polymer that is grafted with a nitrogen-containing associating molecule containing at least one unit so as to bond to each other via a filler or a noncovalent bond.

PTL 3 discloses a rubber composition especially for use for producing tires, which contains at least one diene elastomer, a reinforcing filler, a chemical crosslinking agent and at least one specific modifying agent as a base.

PTL 4 discloses a polymer modified by grafting with nitrogen-containing associating molecules along the polymer chain.

### Citation List

#### Patent Literature

PTL 1: JP 2012-503060 A
PTL 2: JP 2013-530299 A
PTL 3: JP 2013-531726 A
PTL 4: JP 2013-531727 A

### Summary of Invention

#### Technical Problem

For example, regarding a rubber composition for use for producing tires, PTL 3 discloses that a rubber composition having combined mechanical properties of a good stiffness and a high elongation at breakage under moderate

deformation and a low hysteresis loss is suitable for increasing a balance between rolling resistance and resistance to large deformation in production of tires.

Heretofore, a lot of techniques for improving braking performance on an ice road (on-ice performance) have been developed, and further improvement of on-ice performance is desired.

The present invention addresses a problem of providing a rubber composition capable of improving on-ice performance when used for tires.

Solution to Problem

The present inventors have found that, by adding a rubber additive having a specific structure to a rubber composition containing a dienic rubber and a softener, the above-mentioned problem can be solved.

Specifically, the present invention relates to the following [1] to [19].

[1] A rubber composition containing a compound represented by the following formula (I), a dienic rubber and a liquid softener, wherein the mixing ratio (by mass) of the liquid softener to the compound represented by the formula (I) is 4.5/1 to 11/1.

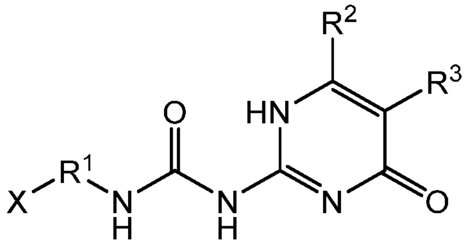

(I)

In the formula (I), $R^1$ represents a divalent hydrocarbon group having 1 or more and 20 or less carbon atoms. $R^2$ and $R^3$ each independently represent a hydrogen atom or a hydrocarbon group having 1 or more and 6 or less carbon atoms. X represents a hydrogen atom, or a group represented by $R^4$-COO-, $R^4$-CONH- or $R^4$-O-, and $R^4$ represents a monovalent hydrocarbon group having 1 or more and 20 or less carbon atoms.

[2] The rubber composition according to [1], wherein, in the formula (I), $R^1$ is at least one selected from the group consisting of a linear or branched alkylene group and a linear or branched alkenylene group having 1 or more and 20 or less carbon atoms.

[3] The rubber composition according to [1] or [2], wherein, in the formula (I), $R^2$ is an alkyl group having 1 or more and 6 or less carbon atoms, and $R^3$ is a hydrogen atom.

[4] The rubber composition according to any one of [1] to [3], wherein, in the formula (I), X is a group represented by $R^4$-COO-.

[5] The rubber composition according to any one of [1] to [4], wherein $R^4$ is a monovalent hydrocarbon group having 2 or more and 20 or less carbon atoms and having 1 or more polymerizable unsaturated bonds.

[6] The rubber composition according to any one of [1] to [5], wherein the dienic rubber contains a natural rubber.

[7] The rubber composition according to any one of [1] to [6], wherein the dienic rubber contains a modified polybutadiene rubber.

[8] The rubber composition according to any one of [1] to [7], further containing at least one selected from a $C_5$ resin, a $C_5$-$C_9$ resin, and a $C_9$ resin.

[9] The rubber composition according to any one of [1] to [8], wherein the liquid softener contains an oil.

[10] The rubber composition according to any one of [1] to [9], further containing a hydrophilic short fiber.

[11] The rubber composition according to any one of [1] to [10], further containing a foaming agent.

[12] The rubber composition according to any one of [1] to [11], further containing a reinforcing filler.

[13] A tire formed from a rubber composition of any one of [1] to [12].

[14] The tire according to [13], which is a winter tire.

[15] The tire according to [13] or [14], wherein the rubber composition is used in a tread part.

[16] A method for producing a tire of any one of [13] to [15], including a step of molding the rubber composition.

[17] Use of a rubber composition of any one of [1] to [12] for tires.

[18] Use of a rubber composition of any one of [1] to [12] for winter tires.

[19] Use according to [17] or [18], wherein the rubber composition is used in a tread part.

Advantageous Effects of Invention

According to the present invention, there can be provided a rubber composition, which, when used for producing tires, can improve on-ice performance.

Description of Embodiments

[Rubber Composition]

The rubber composition of the present invention contains a compound represented by the following formula (I) (hereinafter may be referred to as "a rubber additive in the present invention"), a dienic rubber and a liquid softener, wherein the mixing ratio (by mass) of the liquid softener to the compound represented by the formula (I) is 4.5/1 to 11/1.

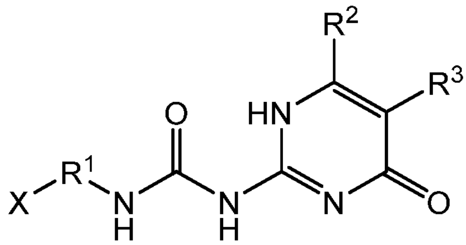

(I)

In the formula (I), $R^1$ represents a divalent hydrocarbon group having 1 or more and 20 or less carbon atoms. $R^2$ and $R^3$ each independently represent a hydrogen atom or a hydrocarbon group having 1 or more and 6 or less carbon atoms. X represents a hydrogen atom, $R^4$-COO-, $R^4$-CONH-, or $R^4$-O-, and $R^4$ represents a monovalent hydrocarbon group having 1 or more and 20 or less carbon atoms.

The rubber composition of the present invention is favorably used for tires, in particular to winter tires. Tires produced using the rubber composition of the present invention are excellent especially in braking performance on ice (on-ice performance).

The details of the working mechanism in the effects of the rubber composition of the present invention are partly unclear but are presumed to be as follows.

By containing a compound represented by the formula (I), the rubber composition of the present invention can form non-permanent crosslinking between rubber molecular chains. It is presumed that, when the rubber surface is brought into contact with a wet road surface, for example, on ice, the non-permanent crosslinking may dissociate to soften the surface, and the chemical interaction between the rubber surface and the wet road surface may be thereby improved to secure improved on-ice performance. On the other hand, owing to the non-permanent crosslinking, the elastic modulus of the rubber composition may be too high and the on-ice performance may be thereby worsened. The rubber composition of the present invention contains the compound represented by the formula (I) in a specific ratio relative to the liquid softener therein, and therefore can give tires more excellent in on-ice performance while maintaining the rubber elasticity as such.

Further, it is presumed that the non-permanent crosslinking to be formed by addition of the rubber additive in the present invention to the rubber composition has more crosslinking points of hydrogen bonding than in conventional non-permanent crosslinking, and accordingly tanδ is reduced and rolling resistance is also reduced, and therefore when used in producing tires, fuel consumption may be lowered. However, the present disclosure should not be interpreted as restricted by this mechanism.

Heretofore, for introducing non-permanent crosslinking, an additional step of grafting a dienic rubber of a rubber component with a nitrogen-containing associating molecule is generally carried out prior to a kneading step (two-step process). However, not requiring such a grafting step, the rubber additive for use in the present invention can introduce a non-permanent crosslinking structure into the rubber composition in one stage of a kneading step to thereby control tanδ and deformation-dependent storage elastic modulus to fall within a desired range.

<Compound Represented by Formula (I)>

In the formula (I), $R^1$ is a divalent hydrocarbon group having 1 or more and 20 or less carbon atoms. From the viewpoint of miscibility with rubber and from the viewpoint of improving on-ice performance, $R^1$ preferably has 2 or more carbon atoms. On the other hand, from the viewpoint of increasing the number of the non-permanent crosslinking points per the mass of the compound represented by the formula (I), $R^1$ preferably has 18 or less carbon atoms, more preferably 12 or less, even more preferably 8 or less, further more preferably 6 or less carbon atoms.

The divalent hydrocarbon group of $R^1$ may have a linear structure, a branched structure or a cyclic structure, or may also be a combination thereof. The hydrocarbon group may be a saturated hydrocarbon group or an unsaturated hydrocarbon group. Examples of the hydrocarbon group include an alkylene group, an alkenylene group, an alkylidene group, and an arylene group. From the viewpoint of miscibility with rubber, $R^1$ is preferably at least one selected from the group consisting of a linear or branched alkylene group and a linear or branched alkenylene group, more preferably at least one selected from the group of a linear alkylene group and a linear alkenylene group. From the viewpoint of miscibility and reactivity with rubber, a linear alkenylene group is even more preferred.

Specifically, in the formula (I), $R^1$ is preferably at least one selected from the group consisting of a linear or branched alkylene group and a linear or branched alkenylene group, both having 1 or more and 20 or less carbon atoms, and more preferably a linear alkenylene group having 1 or more and 20 or less carbon atoms. $R^1$ preferably has a carbon number of 2 or more and also preferably 18 or less, more preferably 12 or less, even more preferably 8 or less, and further more preferably 6 or less.

In the formula (I), $R^2$ and $R^3$ each are independently a hydrogen atom or a hydrocarbon group having 1 or more and 6 or less carbon atoms. The carbon number of the hydrocarbon group is preferably 1 or more and 3 or less, more preferably 1 or 2. The hydrocarbon group may have any of a linear structure, a branched structure or a cyclic structure, or may also have a combination thereof. The hydrocarbon group may be a saturated hydrocarbon group or an unsaturated hydrocarbon group, and examples thereof include an alkyl group, an alkenyl group, an aryl group and an aralkyl group.

From the viewpoint of miscibility with rubber and from the viewpoint of improving on-ice performance, preferably, $R^2$ and $R^3$ each are independently a hydrogen atom or an alkyl group having 1 or more and 6 or less carbon atoms, more preferably a hydrogen atom or an alkyl group having 1 or more and 3 or less carbon atoms. Further, from the above-mentioned viewpoint, preferably, $R^2$ is an alkyl group having 1 or more and 6 or less carbon atoms, and $R^3$ is a hydrogen atom, more preferably $R^2$ is an alkyl group having 1 or more and 3 or less carbon atoms, and $R^3$ is a hydrogen atom, even more preferably $R^2$ is an alkyl group having 1 or 2 carbon atoms, and $R^3$ is a hydrogen atom, and further more preferably $R^2$ is a methyl group, and $R^3$ is a hydrogen atom.

In the formula (I), X is a hydrogen atom, $R^4$-COO-, $R^4$-CONH-, or $R^4$-O-, and $R^4$ is a monovalent hydrocarbon group having 1 or more and 20 or less carbon atoms. From the viewpoint of miscibility with rubber, preferably, X is a hydrogen atom or a group represented by $R^4$-COO-, more preferably a group represented by $R^4$-COO-.

From the viewpoint of miscibility with rubber, and from the viewpoint of improving on-ice performance, $R^4$ preferably has 2 or more carbon atoms, more preferably 3 or more carbon atoms. On the other hand, from the viewpoint of increasing the number of the non-permanent crosslinking points per the mass of the compound represented by the formula (I), $R^4$ preferably has 18 or less carbon atoms, more preferably 12 or less, even more preferably 8 or less and further more preferably 6 or less carbon atoms.

The hydrocarbon group of $R^4$ may have any of a linear structure, a branched structure or a cyclic structure, or a combination thereof. The hydrocarbon group may be a saturated hydrocarbon group or an unsaturated hydrocarbon group. Examples of the hydrocarbon group include an alkyl group, an alkenyl group, an aryl group and an aralkyl group.

From the viewpoint of imparting reactivity with rubber to the rubber additive, $R^4$ is preferably a monovalent hydrocarbon group having 1 or more polymerizable unsaturated bonds and having 2 or more and 20 or less carbon atoms, more preferably a monovalent hydrocarbon group having a polymerizable unsaturated bond at the $\alpha$-position and having 2 or more and 20 or less carbon atoms, even more preferably an alkenyl group having a polymerizable unsaturated bond at the $\alpha$-position and having 2 or more and 20 or less carbon atoms, further more preferably an alkenyl group having a polymerizable unsaturated bond at the $\alpha$-position and having 2 or 3 carbon atoms, and especially more preferably an isopropenyl group.

In this description, the polymerizable unsaturated bond means an addition-polymerizable unsaturated bond.

Preferably, the compound represented by the formula (I) is at least one selected from the group consisting of a compound represented by the following formula (I-I) and a compound represented by the following formula (I-II), and more preferably a compound represented by the following formula (I-I).

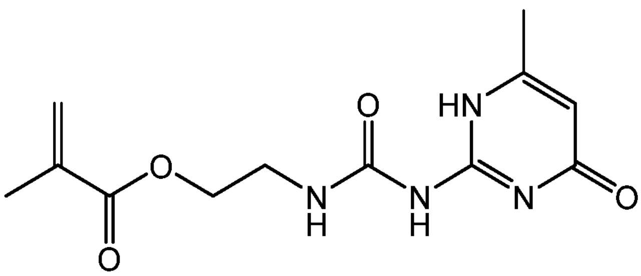

(I-I)

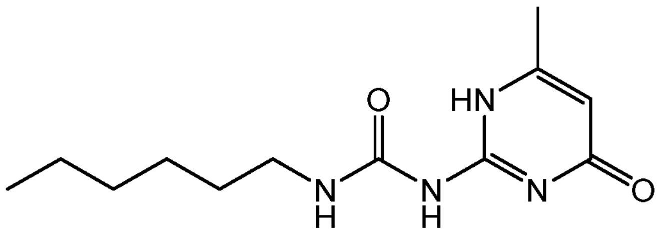

(I-II)

A method for producing the compound represented by the formula (I) is not specifically limited, and any known method is employable. For example, the compound can be produced by reacting a compound represented by the following formula (1) (hereinafter may be referred to as "starting material isocytosine") and a compound represented by the following formula (2) (hereinafter may be referred to as "starting material isocyanate") under a heating condition.

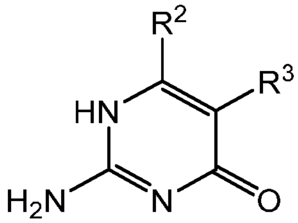

(1)

In the formula (1), $R^2$ and $R^3$ are the same as those mentioned above.

$X\text{-}R^1\text{-}NCO$ (2)

In the formula (2), $R^1$ and X are the same as those mentioned above.

Reaction between the starting material isocytosine and the starting material isocyanate can be carried out in the presence of a solvent. Not specifically limited, the solvent may be any one capable of dissolving the starting material isocytosine and the starting material isocyanate, and for example, dimethyl sulfoxide and dimethylformamide are preferred.

The starting material isocytosine and the starting material isocyanate may be heated after previously put into a reactor, or the starting material isocytosine and a solvent are first put into a reactor, and then the starting material isocyanate may be dropwise added thereto.

The reaction temperature is, from the viewpoint of productivity and from the viewpoint of controlling decomposition of the starting materials, preferably 90 to 180°C, more preferably 120 to 160°C. The reaction time differs depending on the reaction temperature and the reaction scale, but is, from the viewpoint of productivity and reaction conversion rate, preferably 10 to 240 minutes, more preferably 20 to 120 minutes.

One alone or two or more kinds of plural additives in the present invention may be used either singly or as combined.

The content of the rubber additive in the rubber composition of the present invention is, from the viewpoint of improving on-ice performance, preferably 0.1 parts by mass or more relative to 100 parts by mass of the dienic rubber to be mentioned hereinunder, more preferably 0.5 parts by mass or more, even more preferably 1 part by mass or more, and further more preferably 2 parts by mass or more. From the viewpoint of strength at break of the rubber composition, the content of the rubber additive in the rubber composition is preferably 20 parts by mass or less relative to 100 parts by mass of the dienic rubber, more preferably 15 parts by mass or less, even more preferably 10 parts by mass or less, further more preferably 8 parts by mass or less, and especially more preferably 6 parts by mass or less.

<Dienic Rubber>

The rubber for use in the rubber composition of the present invention includes a dienic rubber.

The dienic rubber includes at least one selected from the group consisting of a natural rubber (NR) and a synthetic dienic rubber.

Specifically, the synthetic dienic rubber includes a polybutadiene rubber (BR), a synthetic polyisoprene rubber (IR), a styrene-butadiene copolymer rubber (SBR), a styrene-isoprene copolymer rubber (SIR), an ethylene-butadiene copolymer rubber, a propylene-butadiene copolymer rubber, an ethylene-propylene-butadiene copolymer rubber, an ethylene-$\alpha$-olefin-diene copolymer rubber, a butyl rubber, a halogenobutyl rubber, a methyl halide group-having styrene-isoprene copolymer rubber, a chloroprene rubber, and an acrylonitrile-butadiene copolymer rubber.

From the viewpoint of improving on-ice performance when used for producing tires, preferably, the dienic rubber contains a natural rubber. The content of the natural rubber in the dienic rubber is not specifically limited, and is preferably 20 to 80 parts by mass relative to 100 parts by mass of the dienic rubber, more preferably 30 to 70 parts by mass.

One alone or two or more kinds of these dienic rubbers may be used either singly or as combined. The dienic rubber to be used may be modified or unmodified.

(Modified Dienic Rubber)

In the present invention, preferably, the dienic rubber contains a modified dienic rubber.

Preferably, the modified dienic rubber is any of the following (1) to (3).

(1) Dienic rubber modified with a silane compound at the terminal.
(2) Dienic rubber modified in the main chain.
(3) Dienic rubber modified with a compound containing at least one of a tin atom (Sn) and a nitrogen atom (N) at the terminal.

These are described below.

-Dienic rubber modified with a silane compound at the terminal-

One embodiment of the modified dienic rubber includes a dienic rubber modified with a silane compound at the terminal (silane-modified dienic rubber). Here, the silane compound preferably contains a glycidoxy group.

In the case where the rubber composition contains silica and carbon black as a reinforcing filler to be mentioned hereinunder and when the dienic rubber contains a silane-modified dienic rubber, the interaction between the silane-modified dienic rubber and silica is great so that silica may be partitioned more in a polymer phase containing the silane-modified dienic rubber. As a result, the polymer phase is softened while given microscopic irregularities. Consequently, in the case where the rubber composition containing the silane-modified dienic rubber is used as a tread of a tire, the ground contact area of the tread becomes large and the on-ice performance of the tire improves more. On the other hand, a polymer phase not containing the silane-modified dienic rubber is formed of some other dienic rubber and silica is partitioned more in the polymer phase containing the silane-modified dienic rubber, and consequently, a relatively large amount of carbon black is partitioned in the polymer phase. With that, the polymer phase contains a large amount of carbon black having high reinforcing performance, and therefore the abrasion resistance of the polymer layer improves.

The silane-modified dienic rubber is modified with a silane compound having a glycidoxy group at the terminal, and therefore the interaction between the silane-modified dienic rubber and silica improves more so that the dispersibility of silane in the polymer phase containing the silane-modified dienic rubber further improves and, as a result, when the rubber composition is applied to tires, the on-ice performance of the tires improves further more.

As the dienic rubber to be modified of the silane-modified dienic rubber, usable is a polymer or a copolymer of a conjugated diene compound produced using a conjugated diene compound as a monomer, or a copolymer of a conjugated diene compound and an aromatic vinyl compound produced using a conjugated diene compound and an aromatic vinyl compound as a monomer. Also usable are those produced by modifying these (co)polymers at the molecular terminal and/or the main chain.

Regarding the monomer for use for synthesizing the silane-modified dienic rubber, the conjugated diene compound includes 1,3-butadiene, isoprene, 1,3-pentadiene, 2,3-dimethylbutadiene, 2-phenyl-1,3-butadiene, and 1,3-hexadiene; the aromatic vinyl compound includes styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene.

The silane-modified dienic rubber can be produced by reacting an active terminal-having dienic rubber with various modifying agents at the terminal thereof, for example, according to the methods described in WO2003/046020, and JP 2007-217562 A.

In one preferred embodiment, the silane-modified dienic rubber can be stably produced by reacting an active terminal-having dienic rubber having a cis-1,4 bond content of 75% or more with a silane compound (for example, a hydrocarbyloxysilane compound) at the terminal thereof, followed by further reacting it with a partial carboxylate of a polyalcohol, according to the methods described in WO2003/046020, and JP 2007-217562 A.

A method for synthesizing the active terminal-having dienic rubber is not specifically limited, and may be appropriately selected from known methods. Preferably, at least one compound is selected from the following components (i), (ii) and (iii) and combined as a polymerization catalyst for the synthesis.

Component (i)

In the present invention, the component (i) of a catalyst system for use for producing an active terminal-having dienic rubber through polymerization is a compound containing a rare earth element of Atomic Number 57 to 71 in the Periodic Table, or a reaction product of the compound and a Lewis base. Here, among the rare earth elements of Atomic Number 57 to 71 in the Periodic Table, neodymium, praseodymium, cerium, lanthanum, gadolinium or a mixture thereof is preferred, and neodymium is more preferred.

The rare earth element-containing compound is preferably a salt soluble in a hydrocarbon solvent, and specifically includes carboxylates, alkoxides, 1,3-diketone complexes, phosphates and phosphites of the above-mentioned rare earth element. Among these, carboxylates and phosphates are preferred, and carboxylates are more preferred.

Here, the hydrocarbon solvent includes saturated aliphatic hydrocarbons having 4 to 10 carbon atoms such as butane, pentane, hexane and heptane; saturated alicyclic hydrocarbons having 5 to 20 carbon atoms such as cyclopentane and cyclohexane; monoolefins such as 1-butene and 2-butene; aromatic hydrocarbons such as benzene, toluene and xylene; and halogenohydrocarbons such as methylene chloride, chloroform, trichloroethylene, perchloroethylene, 1,2-dichloroethane, chlorobenzene, bromobenzene and chlorotoluene.

The rare earth element carboxylate includes compounds satisfying the following formula.

$$(R^{15}\text{-}CO_2)_3M$$

wherein $R^{15}$ represents a hydrocarbon group having 1 to 20 carbon atoms; M represents a rare earth element of Atomic Number 57 to 71 in the Periodic Table. Here, $R^{15}$ may be saturated or unsaturated, and is preferably an alkyl group or an alkenyl group, and may be any of a linear, branched or cyclic one. The carboxy group bonds to the primary, secondary or tertiary carbon atom. Specifically, the carboxylate includes salts of octanoic acid, 2-ethylhexanoic acid, oleic acid, neodecanoic acid, stearic acid, benzoic acid, naphthenic acid, or Versatic acid [trade name by Shell Chemical Corporation, a carboxylic acid with a carboxy group bonding to the tertiary carbon atom]. Among these, salts of 2-ethylhexanoic acid, neodecanoic acid, naphthenic acid or Versatic acid are preferred.

The rare earth element alkoxide includes compounds satisfying the following formula.

$$(R^{16}O)_3M$$

wherein $R^{16}$ represents a hydrocarbon group having 1 to 20 carbon atoms; M represents a rare earth element of Atomic Number 57 to 71 in the Periodic Table. The alkoxy group represented by $R^{16}O$ includes a 2-ethyl-hexyloxy group, an oleyloxy group, a stearyloxy group, a phenoxy group and a benzyloxy group. Among these, a 2-ethyl-hexyloxy group and a benzyloxy group are preferred.

The rare earth element 1,3-diketone complex includes an acetylacetone complex, a benzoylacetone complex, a propionylacetone complex, a valerylacetone complex, and an ethylacetylacetone complex of the rare earth element. Among these, an acetylacetone complex and an ethylacetylacetone complex are preferred.

The rare earth element phosphate and phosphite include salts of the rare earth element and bis(2-ethylhexyl) phosphate, bis(1-methylheptyl) phosphate, bis(p-nonylphenyl) phosphate, bis(polyethylene glycol-o-nonylphenyl) phosphate, (1-methylheptyl)(2-ethylhexyl) phosphate, (2-ethylhexyl)(p-nonylphenyl) phosphate, mono-2-ethylhexyl 2-ethylhexylphosphonate, mono-p-nonylphenyl 2-ethylhexylphosphonate, bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid, or (2-ethylhexyl)(p-nonylphenyl)phosphinic acid. Among these, salts of the rare earth element and bis(2-ethylhexyl) phosphate, bis(1-methylheptyl) phosphate, mono-2-ethylhexyl 2-ethylhexylphosphonate or bis(2-ethylhexyl)phosphinic acid are preferred.

Among the rare earth element-containing compounds, neodymium phosphates and neodymium carboxylate are more preferred, and in particular, neodymium branched carboxylates such as neodymium 2-ethylhexanoate, neodymium neodecanoate and neodymium Versatate are most preferred.

The component (i) may also be a reaction product of the rare earth element-containing compound and a Lewis base. Owing to the Lewis base therein, the reaction product is improved in point of the solubility in a solvent for the rare earth element-containing compound and can be stably stored for a long period of time. For making the rare earth element-containing compound readily soluble in a solvent, and for stably storing the compound for a long period of time, the Lewis base is used as a mixture of the two or as a product prepared by previously reacting the two, in a ratio of 0 to 30 mols per mol of the rare earth element, preferably in a ratio of 1 to 10 mols. Here, the Lewis base includes acetylacetone, tetrahydrofuran, pyridine, N,N-dimethylformamide, thiophene, diphenyl ether, triethylamine, organic phosphorus compounds, and mono-hydric or di-hydric alcohols.

The rare earth element-containing compound or a reaction product of the compound and a Lewis acid as mentioned hereinabove as the component (i) can be used as one alone or as two or more kinds thereof either singly or

as combined.

Component (ii)

The component (ii) of the catalyst system to be used for polymerization to give the terminal active polymer in the present invention is an organic aluminumoxy compound and/or an organic aluminum compound represented by the following formula.

$$AlR^{12}R^{13}R^{14}$$

wherein $R^{12}$ and $R^{13}$ are the same or different, each representing a hydrocarbon group having 1 to 10 carbon atoms, or a hydrogen atom; $R^{14}$ represents a hydrocarbon group having 1 to 10 carbon atoms, and $R^{14}$ may be the same as or different from $R^{12}$ or $R^{13}$.

The organic aluminumoxy compound, so-called aluminoxane (also may be referred to alumoxane) includes methylaluminoxane, ethylaluminoxane, propylaluminoxne, butylaluminoxane and chloroaluminoxane. The aluminoxane can sharpen the molecular weight distribution and can improve the activity as catalyst.

The organic aluminum compound includes trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydride, n-propylaluminum dihydride, and isobutylaluminum dihydride; and among these, triethylaluminum, triisobutylaluminum, diethylaluminum hydride and diisobutylaluminum hydride are preferred. One alone or two or more kinds of these organic aluminum compounds may be used either singly or as combined.

Component (iii)

In the present invention, the component (iii) of the catalyst system to be used for polymerization to give the terminal active polymer is at least one halogen compound selected from the group consisting of a Lewis acid, a complex compound of a metal halide compound and a Lewis base, and an active halogen-containing organic compound.

The Lewis acid has Lewis acidity and is soluble in hydrocarbon. Specifically, examples thereof include methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, and silicon tetrachloride. Among these, diethylaluminum chloride, ethylaluminum sesquichloride, ethylaluminum dichloride, diethylaluminum bromide, ethylaluminum sesquibromide and ethylaluminum dibromide are preferred.

Also a reaction product of an alkylaluminum and a halogen, such as a reaction product of triethylaluminum and bromine can be used.

The metal halide compound to constitute the complex compound of a metal halide compound and a Lewis base includes beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide and gold bromide; and among these, magnesium chloride, calcium chloride, barium chloride, manganese chloride, zinc chloride, and copper chloride are preferred, and magnesium chloride, manganese chloride, zinc chloride and copper chloride are more preferred.

The Lewis base to constitute the complex compound of a metal halide compound and a Lewis base is preferably a phosphorus compound, a carbonyl compound, a nitrogen compound, an ether compound or an alcohol. Specifically, preferred examples thereof include tributyl phosphate, tri-2-ethylhexyl phosphate, triphenyl phosphate, tricresyl phosphate, triethyl phosphine, tributyl phosphine, triphenyl phosphine diethylphosphinoethane, diphenylphosphinoethane, acetylacetone, benzoylacetone, propionitrile acetone, valeryl acetone, ethylacetylacetone, methyl acetoacetate, ethyl acetoacetate, phenyl acetoacetate, dimethyl malonate, diethyl malonate, diphenyl malonate, acetic acid, octanoic acid, 2-ethyl-hexanoic acid, oleic acid, stearic acid, benzoic acid, naphthenic acid, Versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. Among these, tri-2-ethylhexyl phosphate, tricresyl phosphate, acetylacetone, 2-ethylhexanoic acid, Versatic acid, 2-ethylhexyl alcohol, 1-decanol and lauryl alcohol are preferred.

The Lewis acid is reacted in a proportion of 0.01 to 30 mols, preferably 0.5 to 10 mols per mol of the metal halide compound. Using the reaction product with a Lewis acid, the metal to remain in the polymer can be reduced.

The active halogen-containing organic compound includes benzyl chloride.

In the present invention, the amount and the compositional ratio of the constituent components of the catalyst system for use in polymerization to give the dienic rubber can be appropriately selected depending on the intended purpose and the necessity. Among these, the component (i) is preferably used in an amount of 0.00001 to 1.0 mmol, more preferably 0.0001 to 0.5 mmol relative to 100 g of the dienic compound. When the amount of the component (i) to be used is made to fall within the range, excellent polymerization activity can be secured, and a deashing step is unnecessary.

The proportion of the organic aluminum compound in the component (i) and the component (ii) is, as a molar ratio, such that the organic aluminum compound in component (i)/component (ii) is 1/1 to 1/700, preferably 1/3 to 1/500.

Further, the proportion of halogen in the component (i) to the component (iii) is, as a molar ratio, 1/0.1 to 1/30, preferably 1/0.2 to 1/15, more preferably 1/2.0 to 1/5.0.

The proportion of aluminum of aluminoxane of the component (ii) to the component (i) is, as a molar ratio, 1/1 to 700/1, preferably 3/1 to 500/1. When the catalyst amount and the constituent component ratio are made to fall within the range, such is favorable since the resultant catalyst can act as a high-activity catalyst and since a step of removing a catalyst residue is unnecessary.

In addition to the above-mentioned components (i) to (iii), a hydrogen gas may be made to coexist during polymerization for the purpose of controlling the molecular weight of the resultant polymer.

Also in addition to the above-mentioned component (i), component (ii) and component (iii) as catalyst components, as needed, a small amount of a conjugated diene compound such as 1,3-butadiene, specifically in a proportion of 0 to 1000 mols per mol of the compound of the component (i), may be used. The conjugated diene compound such as 1,3-butadiene as a catalyst component is not indispensable, but when used, the compound gives an advantage of markedly improve the resultant catalyst activity.

For producing the catalyst, for example, the component (i) to the component (iii) are dissolved in a solvent and, further as needed, a conjugated diene compound such as 1,3-butadiene is added and reacted.

At that time, the order of adding the components is not specifically limited, but from the viewpoint of improving polymerization activity and shortening the period for inducing initiation of polymerization, preferably these components are previously mixed, then reacted and ripened. Here, the ripening temperature is 0 to 100°C or so, preferably 20 to 80°C. At lower than 0°C, ripening could not be attained sufficiently, but at higher than 100°C, catalyst activity may lower or the resultant molecular weight distribution may broaden.

The ripening time is not also specifically limited. Ripening may be carried out by in-line contact of the components before adding them to a polymerization catalyst, and in general, 0.5 minutes or more may be sufficient, and the catalyst can be stable for a few days.

For the polymerization, preferably, all the materials participating in the polymerization including catalysts, solvents and monomers are substantially free from any reaction-inhibiting substances such as water, oxygen, carbon dioxide and protonic compounds.

Preferably, in the polymer to be used in the first modification reaction (modification with a silane compound) in the present invention, at least 10% by mass of the polymer chain is a living chain.

For modification with a silane compound (modifying agent), preferably, the silane compound has a glycidoxy group as mentioned above, and specifically, the glycidoxy group-having silane compound includes 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, and (3-glycidoxypropyl)methyldimethoxysilane, and among these, 3-glycidoxypropyltrimethoxysilane and 3-glycidoxypropyltriethoxysilane are especially preferred.

As described above, after modified with a silane compound (modifying agent), preferably, the resultant polymer is stabilized by reacting with a partial carboxylate of a polyalcohol. The partial carboxylate of a polyalcohol is an ester of a polyalcohol with a carboxylic acid, and means a partial ester having one or more hydroxy groups. Specifically, an ester of a saccharide or a modified saccharide having 4 or more carbon atoms and a fatty acid is preferably used. More preferably, the ester includes (a) a fatty acid partial ester of a polyalcohol, especially a partial ester (any of a monoester, a diester or a triester) of a saturated higher fatty acid or unsaturated higher fatty acid having 10 to 20 carbon atoms and a polyalcohol and (b) an ester compound prepared by bonding 1 to 3 partial esters of a polycarboxylic acid and a higher alcohol to a polyalcohol.

The polyalcohol for use as a starting material for the partial ester is preferably a saccharide (which may be hydrogenated or may not be hydrogenated) having 5 or 6 carbon atoms and having at least 3 hydroxy groups, a glycol, and a polyhydroxy compound. The starting material fatty acid is preferably a saturated or unsaturated fatty acid having 10 to 20 carbon atoms, and examples thereof include stearic acid, lauric acid and palmitic acid.

Among the fatty acid partial ester of a polyalcohol mentioned above, a sorbitan fatty acid ester is preferred, and specific examples thereof include sorbitan monolaurate, sorbitan monopalmitate, sorbitan monostearate, sorbitan

tristearate, sorbitan monooleate, and sorbitan trioleate.

-Dienic rubber modified at the main chain-

The dienic rubber modified at the main chain can be produced, for example, according to (a) a method of graft polymerization of a (co)polymer of the above-mentioned monomer with a polar group-containing monomer, (b) a method of copolymerization of the above-mentioned monomer and a polar group-containing monomer, or (c) a method of adding a polar group-containing compound to a (co)polymer of the above-mentioned monomer. The copolymerization using a polar group-containing monomer can be carried out according to emulsion polymerization, or may also be carried out according to living anionic polymerization or living radical polymerization, and the copolymer of the monomer and a polar group-containing monomer may be one prepared through block polymerization of a monomer selected from a conjugated diene compound and an aromatic vinyl compound, and a polar group-containing monomer.

In the method (a) of graft polymerization of a (co)polymer of a conjugated diene compound or an aromatic vinyl compound with a polar group-containing monomer, and in the method (b) of copolymerization of a conjugated diene compound or an aromatic vinyl compound with a polar group-containing monomer, the polar group-containing monomer to be used is preferably a polar group-containing vinylic monomer. In the method (c) of adding a polar group-containing compound to a (co)polymer of a conjugated diene compound or an aromatic vinyl compound, the polar group-containing compound to be used is preferably a polar group-containing mercapto compound. Preferred examples of the polar group include an alkoxysilyl group.

Specifically, the polar group-containing vinylic monomer include (meth)acryloxymethyltrimethoxysilane [here, "(meth)acryloxy" indicates acryloxy and/or methacryloxy, and the same shall apply hereinunder], (meth)acryloxymethylmetyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxymethyltripropoxysilane, (meth)acryloxymethylmethyldipropoxysilane, (meth)acryloxymethydimethylpropoxysilane, γ-(meth)acryloxypropyltrimethoxysilane, γ-(meth)acryloxypropylmethyldimethoxysilane, γ-(meth)acryloxypropyldimethylmethoxysilane, γ-(meth)acryloxypropyltriethoxysilane, γ-(meth)acryloxypropylmethyldiethoxysilane, γ-(meth)acryloxypropyldimethylethoxysilane, γ-(meth)acryloxypropyltripropoxysilane, γ-(meth)acryloxypropylmethyldipropoxysilane, γ-(meth)acryloxypropyldimethylpropoxysiane, γ-(meth)acryloxypropylmethyldiphenoxysilane, γ-(meth)acryloxypropyldimethylphenoxysilane, γ-(meth)acryloxypropylmethyldibenzyloxysilane, γ-(meth)acryloxypropyldimethylbenzyloxysilane, trimethoxyvinylsilane, triethoxyvinylsilane, 6-trimethoxysilyl-1,2-hexene, and p-trimethoxysilylstyrene. One alone or two or more kinds of these monomers may be used either singly or as combined.

Specifically, the polar group-containing mercapto compound includes 3-mercaptopropyltrimethoxysilane, 3-mercaptopropyltriethoxysilane, 3-mercaptopropylmethyldimethoxysilane, 3-mercaptopropyldimethylmethoxysilane, 2-meraptoethyltrimethoxysilane, 2-mercaptoethyltriethoxysilane, mercaptomethylmethyldimethoxysilane, and mercaptomethyltrimethoxysilane. One alone or two or more kinds of these compounds may be used either singly or as combined.

-Dienic rubber modified with a compound containing at least one of a tin atom (Sn) and a nitrogen atom (N) at the terminal-

The modified dienic rubber may be modified with a compound containing at least one of a tin atom (Sn) and a nitrogen atom (N) at the terminal. When the dienic rubber is modified with a compound containing at least one of a tin atom and a nitrogen atom, the interaction between the modified dienic rubber and carbon black improves more, the dispersibility or carbon black in a polymer phase containing the modified dienic rubber also improves more, and the abrasion resistance of the rubber composition therefore improves more.

The dienic rubber modified with a compound containing at least one of a tin atom (Sn) and a nitrogen atom (N) at the molecular terminal can be produced, for example, according to a method of living-polymerizing the above-mentioned monomer using a polymerization initiator containing a tin atom and/or a nitrogen atom followed by modifying the resultant polymer with a modifying agent containing a tin atom and/or a nitrogen atom at the polymerization active terminal thereof. The living polymerization is preferably anionic polymerization.

In the case where a (co)polymer having an active terminal is produced according to living polymerization, a lithium amide compound is preferred for the polymerization initiator. The lithium amide compound includes lithium hexamethyleneimide, lithium pyrrolidide, lithium piperidide, lithium heptamethyleneimide, lithium dodecamethyleneimide, lithium dimethylamide, lithium diethylamide, lithium dipropylamide, lithium dibutylamide, lithium dihexylamide, lithium diheptylamide lithium dioctylamide, lithium di-2-ethylhexylamide, lithium didecylamide, lithium N-methylpiperazide, lithium ethylpropylamide, lithium ethylbutylamide, lithium methylbutylamide, lithium ethylbenzylamide, and lithium methylphenethylamide.

As the lithium amide compound, a lithium amide compound represented by the following formula (A) is preferably used.

Li-AM (A)

wherein AM represents a substituted amino group represented by the following formula (II) or a cyclic amino group represented by the following formula (III). Using the lithium amide compound represented by the formula (A), a modified dienic rubber having, as introduced thereinto, at least one nitrogen-containing functional group selected from the group consisting of the substituted amino group represented by the formula (II) and the cyclic amino group represented by the formula (III) can be obtained.

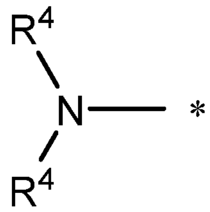

(II)

In the formula (II), $R^4$ each independently represents an alkyl group, a cycloalkyl group or an aralkyl group having 1 to 12 carbon atoms; * indicates a bonding position to Li.

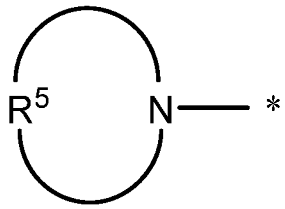

(III)

In the formula (III), $R^5$ represents an alkylene group, a substituted alkylene group, an oxyalkylene group or an N-alkylamino-alkylene group, which has 3 to 16 methylene groups; * indicates a bonding position to Li.

In the above formula (II), $R^4$ is an alkyl group, a cycloalkyl group or an aralkyl group having 1 to 12 carbon atoms, and preferred examples thereof include a methyl group, an ethyl group, a butyl group, an octyl group, a cyclohexyl group, a 3-phenyl-1-propyl group and an isobutyl group. $R^4$'s may be the same or different.

In the above formula (III), $R^5$ is an alkylene group, a substituted alkylene group, an oxyalkylene group or an N-alkylamino-alkylene group, which has 3 to 16 methylene groups. Here, the substituted alkylene group includes monosubstituted to octasubstituted alkylene groups, and the substituent thereof includes a linear or branched alkyl group, a cycloalkyl group, a bicycloalkyl group, an aryl group and an aralkyl group having 1 to 12 carbon atoms. Specifically, $R^5$ is preferably a trimethylene group, a tetramethylene group, a hexamethylene group, an oxydiethylene group, an N-alkylazadiethylene group, a dodecamethylene group and a hexadecamethylene group.

The lithium amide compound may be previously prepared from a secondary amine and a lithium compound and used in polymerization reaction, or the compound may be formed in the polymerization system.

Here, the secondary amine includes dimethylamine, diethylamine, dibutylamine, dioctylamine, dicyclohexylamine, diisobutylamine, and in addition thereto, cyclic amines such as azacycloheptane (that is, hexamethyleneimine), 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azecycloheptane, 9-isoamyl-1-azacyclohetadecane, 2-methyl-1-azacyclohetadec-9-ene, 3-isobutyl-1-azacyclododecane, 2-methyl-7-tert-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.3.3]nonane, 3-(tert-butyl)-7-azabicyclo[4.3.0]nonane, and 1,5,5-trimethyl-3-azabicyclo[4.4.0]decane.

The lithium compound usable herein includes ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, and a hydrocarbyl lithium such as a reaction product of diisopropenylbenzene and butyl lithium.

In modifying the active terminal of the active terminal-having (co)polymer with a modifying agent, the modifying agent to be used may be a modifying agent having at least one of a tin atom and a nitrogen atom.

The tin atom-containing modifying agent (that is, a tin-containing compound) is preferably a tin-containing coupling agent represented by the following formula (IV):

$$R^6{}_aSnX_b \qquad (IV)$$

wherein $R^6$ each are independently selected from the group consisting of an alkyl group having 1 to 20 carbon atoms, a cycloalkyl group having 3 to 20 carbon atoms, an aryl group having 6 to 20 carbon atoms and an aralkyl group having 7 to 20 carbon atoms; X each are independently chlorine or bromine; a is 0 to 3, b is 1 o 4, and a+b=4. A dienic rubber modified with the tin-containing coupling agent of the formula (IV) has at least one tin-carbon bond.

Here, specifically, $R^6$ includes a methyl group, an ethyl group, an n-butyl group, a neophyl group, a cyclohexyl group, an n-octyl group, and a 2-ethylhexyl group. The coupling agent of the formula (IV) is preferably tin tetrachloride, $R^6SnCl_3$, $R^6{}_2SnCl_2$, or $R^6{}_3SnCl$, and tin tetrachloride is especially preferred.

The nitrogen atom-containing modifying agent (that is, nitrogen-containing compound) includes a nitrogen-containing compound having any of a substituted or unsubstituted amino group, an amide group, an imino group, an imidazole group, a nitrile group, and a pyridyl group, and more specifically includes N,N'-dimethylimidazolidinone (that is, 1,3-dimethyl-2-imidazolidinone), N-methylpyrrolidone, 4-dimethylaminobenzylidene-aniline, 4,4'-bis(N,N-dimethylamino)benzophenone, 4,4'-bis(N,N-diethylamino)benzophenone, 4-(N,N-dimethylamino)benzophenone, 4-(N,N-diethylamino)benzophenone, [4-(N,N-dimethylamino)phenyl]methyl ethyl ketone, 4,4'-bis(1-hexamethyleneiminomethyl)benzophenone, 4,4'-bis(1-pyrrolidinomethyl)benzophenone, 4-(1-hexamethyleneiminomethyl)benzophenone, 4-(1-pyrrolidinomethyl)benzophenone, [4-(1-hexamethyleneimino)phenyl]methyl ethyl ketone, and 3-[N,N-methyl(trimethylsilyl)amino]propyldimethylethoxysilane.

In addition to the above-mentioned modified dienic rubbers (1) to (3), a terminal-modified dienic rubber is also usable, and examples thereof include terminal-modified dienic rubbers disclosed in JP 2004-513987 A, JP 11-29603 A, JP 2003-113202 A, and JP 6-29338 A. Further, examples of known modified dienic rubbers modified at the main chain thereof include modified dienic rubbers disclosed in JP 2003-534426 A, and JP 2002-201310 A.

The modified dienic rubber preferably has a butadiene skeleton, and is more preferably a modified butadiene rubber. In the case where the modified dienic rubber has a butadiene skeleton, the rubber composition can be soft, and when the rubber composition is used for a tread, the ground contact area of the tread becomes large and the on-ice performance thereof improves more. Here, the butadiene skeleton-having dienic rubber includes a polybutadiene rubber (BR), and a styrene-butadiene copolymer rubber (SBR). The modified dienic rubber is, from the viewpoint of on-ice performance, preferably a modified polybutadiene rubber (BR).

One alone or two or more kinds of modified dienic rubbers may be used either singly or as combined.

The content of the modified dienic rubber is preferably 30% by mass or more relative to the total amount of the dienic rubber, more preferably 40% by mass or more, and is preferably 75% by mass or less, more preferably 70% by mass or less, even more preferably 65% by mass or less. When the content of the modified dienic rubber falls within the range, on-ice performance and abrasion resistance can be sufficiently improved. In the case where two or more kinds of modified dienic rubbers are used, preferably, the total amount thereof falls within the above range. The same shall apply to the content of each component in this description.

The total content of the dienic rubber in the rubber composition is, from the viewpoint of expressing dienic rubber-derived physical properties, preferably 30% by mass or more, more preferably 40% by mass or more. Also preferably, the total content is 80% by mass or less, more preferably 70% by mass or less, even more preferably 60% by mass or less.

The total content of the dienic rubber means a total content of a dienic rubber including a modified dienic rubber and an unmodified dienic rubber.

<Liquid Softener>

The rubber composition of the present invention contains a liquid softener. The liquid softener is a softener that is liquid at room temperature (25°C).

The liquid softener preferably contains at least one selected from an oil and a liquid polymer, and more preferably contains an oil.

(Oil)

The rubber composition of the present invention preferably contains an oil as a liquid softener. Here, an oil includes a petroleum-based oil such as n aroma oil, a paraffin oil, and a naphthene oil, and a vegetable-based oil such as palm oil, castor oil, cottonseed oil and a soybean oil.

The oil preferred for the liquid softener is a petroleum-based oil such as a paraffin oil, and a naphthene oil.

(Liquid polymer)

The liquid polymer is preferably a liquid rubber, and examples thereof include a liquid polyisoprene, a liquid polybutadiene, a liquid polybutene, a liquid styrene-butadiene rubber, a terminal hydroxy group-having polybutadiene, a maleated polybutene, and a maleated polybutadiene.
In the present invention, the liquid polymer that is liquid at room temperature does not fall under a dienic rubber.
In the rubber composition of the present invention, the mixing ratio (by mass) of the liquid softener to the compound represented by the formula (I) [(liquid softener)/(compound represented by formula (I))] is 4.5/1 to 11/1.
When the mixing ratio of the liquid softener to the compound represented by the formula (I) falls within the above range, on-ice permeance can be improved while the other properties are maintained as such.
The mixing ratio of the liquid softener to the compound represented by the formula (I) in the rubber composition is preferably 5/1 to 10/1.
The content of the liquid softener in the rubber composition of the present invention is, from the viewpoint of improving on-ice performance, preferably 10 parts by mass or more relative to 100 parts by mass of the dienic rubber, more preferably 20 parts by mass or more, even more preferably 25 parts by mass or more, and is preferably 45 parts by mass or less, more preferably 40 parts by mass or less, even more preferably 35 parts by mass or less.

<Other Softener>

The rubber composition of the present invention may contain a softener that is solid at room temperature as some other softener in addition to the above-mentioned liquid softener, and preferably contains such a softener solid at room temperature.
The other softener is not specifically limited so far as it can be mixed in rubber compositions for ordinary tires, and examples thereof include a resin containing a petroleum-based resin such as a $C_5$ resin, a $C_5$-$C_9$ resin and a $C_9$ resin, and a plasticizer such as an ester-based plasticizer.
Hereinunder, the above are described.

(Resin)

The resin to be used as a softener preferably has a softening point of 200°C or lower (measurement method: ASTME28-58-T), more preferably falling within a range of 80 to 150°C. When the softening point is higher than 200°C, the resin may worsen workability. When the softening point is lower than 80°C, the resin may have some influence on gripping performance. From these viewpoints, the softening point is more preferably within a range of 90 to 120°C.
In the present invention, a petroleum-based resin may be used as a softener, and the petroleum-based resin preferably contains at least one resin selected from the group consisting of a $C_5$ resin, a $C_5$-$C_9$ resin, and a $C_9$ resin, more preferably contains at least one resin selected from the group consisting of a $C_5$ resin, and a $C_5$-$C_9$ resin.

-$C_5$ resin-

The $C_5$ resin indicates a $C_5$ synthetic petroleum resin, and examples of the $C_5$ resin include an aliphatic petroleum resin to be produced through polymerization of a $C_5$ fraction obtained in thermal cracking of naphtha in a petrochemical industry, using a Friedel-Crafts catalyst such as $AlCl_3$ or $BF_3$.
The $C_5$ fraction generally includes an olefinic hydrocarbon such as 1-pentene, 2-pentene, 2-methyl-1-butene, 2-methyl-2-butene, and 3-methyl-1-butene; and a diolefinic hydrocarbon such as 2-methyl-1,3-butadiene, 1,2-pentadiene, 1,3-pentadiene, and 3-methyl-1,2-butadiene.
As the $C_5$ resin, commercial products can be used, and examples thereof include an aliphatic petroleum resin from Exxon Mobile Corporation, "Escprez (registered trademark) 1000 Series"; and A100, B170, M100 and R100 of an aliphatic petroleum resin from Zeon Corporation, "Quinton (registered trademark) 100 Series".

-$C_5$-$C_9$ resin-

The $C_5$-$C_9$ resin indicates a $C_5$-$C_9$ synthetic petroleum resin, and examples of the $C_5$-$C_9$ resin include a solid polymer produced through polymerization of a petroleum-derived $C_5$-$C_{11}$ fraction, using a Friedel-Crafts catalyst such as $AlCl_3$ or $BF_3$, and more specifically include a copolymer consisting mainly of styrene, vinyltoluene, $\alpha$-methylstyrene and indene.
The $C_5$-$C_9$ resin is preferably a resin in which the content of components of $C_9$ or more is small, from the viewpoint of miscibility with dienic rubber. Here, "the content of components of $C_9$ or more is small" means that the content of components of $C_9$ or more in the total amount of resin is less than 50% by mass, preferably 40% by mass or less.

As the $C_5$-$C_9$ resin, commercial products can be used, and examples thereof include a product name "Quinton (registered trademark) G100B" (from Zeon Corporation, and a product name "ECR213" (from Exxon Mobile Corporation).

-$C_9$ resin-

The $C_9$ resin is, for example, a resin produced by polymerizing an aromatic monomer having 9 carbon atoms of essentially vinyltoluene, alkylstyrene and indene, which is a $C_9$ fraction to be produced as a side product along with petrochemical base materials such as ethylene and propylene in thermal cracking of naphtha in a petrochemical industry. Here, specific examples of the $C_9$ fraction to be obtained in thermal cracking of naphtha include vinyltoluene, $\alpha$-methylstyrene, $\beta$-methylstyrene, $\gamma$-methylstyrene, o-methylstyrene, p-methylstyrene, vinyltoluene and indene.

The $C_9$ resin can also be produced through copolymerization of a $C_9$ fraction with a $C_8$ fraction of styrene, a $C_{10}$ fraction of methylindene or 1,3-dimethylstyrene, and further with other starting materials of naphthalene, vinylnaphthalene, vinylanthracene or p-tert-butylstyrene, directly as a mixture of these $C_8$-$C_{10}$ fractions and, for example, using a Friedel Crafts catalyst. The $C_9$ resin may also be a modified petroleum resin modified with a hydroxy group-having compound or an unsaturated carboxylic acid compound.

As the $C_9$ resin, commercial products can be used, and examples of the unmodified $C_9$ petroleum resin include a trade name "Neopolymer L-90", "Neopolymer 120", "Neopolymer 130", and "Neopolymer 140" (from JXTG Nippon Oil & Energy Corporation).

As other softeners, in addition to the above-mentioned petroleum-based resin, a natural resin such as a rosin resin and a terpene resin, and a synthetic resin such as a phenolic resin, a coal resin and a xylene resin may also be used.

The rosin resin includes a gum rosin, a tall oil rosin, a wood rosin, a hydrogenated rosin, a disproportionated resin, a polymer resin, and a modified resin of glycerin and pentaerythritol; the terpene resin includes an $\alpha$-pinene-based, $\beta$-pinene-based or dipentene-based terpene resin, and an aromatic-modified terpene resin, a terpene-phenolic resin, and a hydrogenated terpene rosin. Among these natural resins, from the viewpoint of abrasion resistance and gripping performance of the mixed rubber composition, a polymer resin, a terpene-phenolic resin, and a hydrogenated terpene resin are preferred.

The phenolic resin includes an alkylphenol-formaldehyde resin and a rosin modification thereof, an alkylphenol-acetylene resin, a modified alkylphenol resin, and a terpene-phenol resin, and specific examples thereof include a novolak-type alkylphenol resin of a trade name "Hitanol 1502 (from Hitachi Chemical Co., Ltd), and a p-t-butylphenol-acetylene resin of a trade name "Koresin" (from BASF Corporation).

The petroleum resin includes a chromane-indene resin.

The xylene resin includes a xylene-formaldehyde resin.

In addition, a polybutene can also be used as a resin that gives tackiness.

(Plasticizer)

In the present invention, a plasticizer may also be used as the other softener. The plasticizer to be used as a softener preferably has a freezing point of -50°C or lower. A plasticizer having a freezing point of -50°C or lower can lower the elastic modulus of the rubber composition at low temperatures, can increase the true contact area between a tread and a road surface and can improve the adhesive frictional force therebetween, and therefore can greatly improve gripping performance in a low-temperature range.

Such a plasticizer is preferably an ester plasticizer, and is specifically preferably a phthalic acid derivative, a long-chain fatty acid derivative, a phosphoric acid derivative, a sebacic acid derivative and an adipic acid derivative.

Some hydrocarbon plasticizers may have a freezing point of -50°C or lower, but the rubber composition of the present invention preferably contains plural softening components differing in the structure, and accordingly, one having a different structure such as an ester plasticizer is preferably used.

The phthalic acid derivative includes a phthalate such as di-2-ethylhexyl phthalate (DOP) and a diisodecyl phthalate (DIDP); the long-chain fatty acid derivative includes a long-chain fatty acid glycerin ester; the phosphoric acid derivative includes a phosphate such as tri(2-ethylhexyl) phosphate (TOP) and tributyl phosphate (TBP); the sebacic acid derivative includes an sebacate such as di(2-ethylhexyl) sebacate (DOS), and diisooctyl sebacate (DIOS); and the adipic acid derivative includes an adipate such as di(2-ethylhexyl) adipate (DOA) and diisooctyl adipate (DIOA). One alone or two or more kinds of these plasticizers may be used either singly or as combined.

The content of the other softener in the rubber composition of the present invention is, from the viewpoint of improving on-ice performance, preferably 5 parts by mass or more relative to 100 parts by mass of the dienic rubber, more preferably 10 parts by mass or more, even more preferably 12 parts by mass or more, and is preferably 45 parts by mass or less, more preferably 30 parts by mass or less.

<Hydrophilic Short Fiber>

The rubber composition of the present invention preferably contains a hydrophilic short fiber. In particular, when the rubber composition contains a hydrophilic short fiber and a foaming agent to be mentioned hereinunder, the gas to be generated from the foaming agent during vulcanization can penetrate into the inside of the hydrophilic short fiber to form foams having a shape corresponding to the shape of the hydrophilic short fiber and, in addition, the foams are coated with a resin derived from the hydrophilic short fiber and are therefore hydrophilized. Consequently, when the rubber composition containing a hydrophilic short fiber and a foaming agent is used as a tread in producing tires, the wall surfaces of the foams can be exposed out of the tread surface in use of tires to thereby enhance the affinity with water and, as a result, the foams can positively take water thereinto so that the tires can be given excellent water repellency and the on-ice performance of the tires can be greatly improved.

The hydrophilic resin for use as a starting material for the hydrophilic short fiber includes an ethylene-vinyl alcohol copolymer, a vinyl alcohol homopolymer, a poly(meth)acrylic acid or an ester thereof, a polyethylene glycol, a carboxyvinyl copolymer, a styrene-maleic acid copolymer, a polyvinylpyrrolidone, a vinylpyrrolidone-vinyl acetate copolymer, and a mercapto ethanol; and among these, an ethylene-vinyl alcohol copolymer, a vinyl alcohol homopolymer and a poly(meth)acrylic acid are preferred, and an ethylene-vinyl alcohol copolymer is more preferred.

On the surface of the hydrophilic short fiber, preferably, a coating layer of a low-melting-point resin having an affinity for the dienic polymer and preferably having a melting point lower than the vulcanization maximum temperature of the rubber composition is formed. By forming such a coating layer, the dispersibility of the hydrophilic short fiber in the dienic polymer can be improved while the affinity for water that the short fiber has is effectively held since the affinity between the coating layer and the dienic polymer is good. In addition, the low-melting-point resin can melt during vulcanization to be a fluid coating layer thereby contributing toward adhesion between the dienic polymer and the hydrophilic short fiber, and accordingly a tire given good water repellency and durability can be readily realized. The thickness of the coating layer may vary depending on the mixing amount and the mean particle size of the hydrophilic short fiber, but is generally 0.001 to 10 μm, preferably 0.001 to 5 μm.

The melting point of the low-melting-point resin for use for the coating layer is preferably lower than the highest temperature in vulcanization of the rubber composition. The highest temperature in vulcanization means a highest temperature that the rubber composition reaches during vulcanization. For example, in the case of mold vulcanization, the temperature means a highest temperature that the rubber composition reaches after having entered the mold and having gone out to be cooled outside the mold, and the vulcanization maximum temperature can be measured, for example, by burying a thermocouple in the rubber composition. The upper limit of the melting point of the low-melting-point resin is, though not specifically limited, preferably selected in consideration of the above-mentioned points, and in general, the upper limit is preferably lower by 10°C or more than the vulcanization maximum temperature of the rubber composition, more preferably lower by 20°C or more. An industrial vulcanization temperature for the rubber composition is generally at most about 190°C or so, and for example, when the vulcanization maximum temperature is set at that 190°C, the melting point of the low-melting-point resin is generally selected within a range of lower than 190°C, preferably at 180°C or lower, more preferably 170°C or lower.

The low-melting-point resin is preferably a polyolefinic resin, and examples thereof include a polyethylene, a polypropylene, a polybutene, a polystyrene, an ethylene-propylene copolymer, an ethylene-methacrylic acid copolymer, an ethylene-ethyl acrylate copolymer, an ethylene-propylene-diene tercopolymer, an ethylene-vinyl acetate copolymer, and ionomer resins thereof.

Preferably, the hydrophilic short fiber has a mean length of 0.1 to 50 mm, more preferably 1 to 7 mm, and a mean diameter of 1μm to 2 mm, more preferably 5 pm to 0.5 mm. When the mean length and the mean diameter each fall within the above range, short fibers would not be entangled more than is needed and therefore can secure good dispersibility.

The mixing amount of the hydrophilic short fiber is preferably within a range of 0.1 to 100 parts by mass relative to 100 parts by mass of the total the dienic rubber, more preferably within a range of 1 to 50 parts by mass, even more preferably within a range of 1 to 10 parts by mass. When the mixing ratio of the hydrophilic short fiber is made to fall within the range, a good balance between on-ice performance and abrasion resistance can be secured.

<Foaming Agent>

The rubber composition of the present invention preferably includes a foaming agent. In the case where the rubber composition contains a foaming agent and when the rubber composition is vulcanized to produce a vulcanized rubber, foams derived from the foaming agent are formed in the vulcanized rubber. Accordingly, when the rubber composition containing a foaming agent is used for a tread to produce tires, the on-ice performance of the tires can be improved more owing to the scratching effect and the water-discharging effect of the foams in the tread.

The foaming agent includes azodicarbonamide (ADCA), dinitrosopentamethylenetetramine (DNPT), dinitrosopentastyrenetetramine, benzenesulfonylhydrazide derivatives, p,p'-oxybisbenzenesulfonylhydrazide (OBSH), ammonium bicarbonate, sodium bicarbonate, ammonium carbonate, nitrososulfonylazo compounds, N,N'-dimethyl-N,N'-dinitrosophthalamide, toluenesulfonyl hydrazide, p-toluenesulfonyl semicarbazide, and p,p'-oxybisbenzenesulfonyl semicarbazide. Of these foaming agents, dinitrosopentamethylenetetramine (DNPT) is preferred. These foaming agents may be used alone, or two or more of them may be used in combination.

The mixing amount of the foaming agent, which is not particularly limited, is preferably 0.1 to 30 parts by mass, and more preferably 1 to 20 parts by mass relative to 100 parts by mass of the total of the dienic rubber.

Preferably, the foaming agent is combined with a foaming auxiliary of urea, zinc stearate, zinc benzenesulfinate or zinc oxide. These foaming auxiliaries be used alone, or two or more of them may be used in combination. Using such a foaming auxiliary in combination facilitates foaming reaction to increase the degree of completion of the reaction, suppressing unnecessary degradation over time.

The mixing amount of the auxiliary agent is not specifically limited, but is preferably within a range of 1 to 30 parts by mas relative to 100 parts by mass of the total of the dienic polymer.

The vulcanized rubber obtained by vulcanizing the rubber composition containing a foaming agent has a foaming ratio of usually 1 to 50%, and preferably 5 to 40%. When a foaming agent is mixed and the foaming ratio is too large, voids on the surface of the rubber may also be large and a sufficient ground contact area could not be secured, but when the foaming ratio falls within the above range, foams capable of effectively functioning as a drain can be secured and the amount of the foams can be suitably held without detracting from durability. Here, the foaming ratio of vulcanized rubber means an average foaming ratio Vs, which is specifically calculated by the following formula (2).

$$Vs = (\rho_0/\rho_1 - 1) \times 100\ (\%) \qquad (2)$$

In formula (2), $\rho_1$ represents the density (g/cm$^3$) of vulcanized rubber (foamed rubber) and $\rho_0$ represents the density (g/cm$^3$) of the solid phase of the vulcanized rubber (foamed rubber). The mass of the vulcanized rubber in ethanol and the mass of the vulcanized rubber in air are measured to calculate the density of the vulcanized rubber and the density of the solid phase of the vulcanized rubber. The foaming ratio may be appropriately changed according to the type and the amount of the foaming agent and the foaming auxiliary.

<Reinforcing Filler>

Preferably, the rubber composition of the present invention further contains a reinforcing filler from the viewpoint of reinforcing the mechanical properties of rubber and from the viewpoint of obtaining a rubber composition having a desired storage elastic modulus and tanδ.

Examples of the reinforcing filler for use in the rubber composition of the present invention include carbon black, and an organic reinforcing filler and an inorganic reinforcing filler to be mentioned hereinunder. One alone or two or more kinds of these reinforcing fillers may be used either singly or as combined.

Carbon black is not specifically limited so far as it can improve mechanical properties, and any known carbon black whose $I_2$ adsorption amount, CTAB specific surface area, $N_2$ adsorption amount and DBP adsorption amount are appropriately selected is usable here. Carbon black is not specifically limited, and examples thereof include GPF, FEF, HAF, ISAF or SAF grade carbon black. One alone or two or more kinds of such carbon black may be used either singly or as combined.

Examples of the organic reinforcing filler include organic functionalized polyvinyl aromatic fillers described in WO2006/069792 and WO2006/069793.

The inorganic reinforcing filler is, for example, at least one selected from the group consisting of silica, aluminum hydroxide, clay, talc, calcium carbonate and zeolite. From the viewpoint of obtaining a rubber composition showing excellent storage elastic modulus and tanδ, the inorganic reinforcing filler is preferably at least one selected from the group consisting of silica and aluminum hydroxide, and is more preferably silica.

Silica is not specifically limited, and examples thereof include a wet-process silica (hydrous silicic acid), a dry-process silica (silicic anhydride), calcium silicate, and aluminum silicate. Among these, from the viewpoint of easy availability, a wet-process silica is preferred. One alone or two or more kinds of these silicas can be used either singly or as combined.

The content of the reinforcing filler in the rubber composition is, from the viewpoint of reinforcing performance, preferably 1 part by mass or more relative to 100 parts by mass of the dienic rubber, more preferably 5 parts by mass or more, even more preferably 10 parts by mass or more, further more preferably 25 parts by mass or more, further more preferably 40 parts by mass or more, further more preferably 50 parts by mass or more, further more preferably 60 parts by mass or more. From the viewpoint of the workability of the rubber composition, the content of the reinforcing

filler in the rubber composition is preferably 120 parts by mass or less relative to 100 parts by mass of the dienic rubber, more preferably 100 parts by mass or less, even more preferably 80 parts by mass or less.

<Coupling Agent>

In the case where the rubber composition of the present invention contains an inorganic reinforcing agent, preferably, the rubber composition further contains a coupling agent for the purpose of improving the mixing effect of the inorganic reinforcing filler. Though not specifically limited, the coupling agent is, from the viewpoint of reactivity with an inorganic reinforcing filler, preferably a silane coupling agent, more preferably a silane coupling agent containing a sulfur atom.

Examples of the silane coupling agent containing a sulfur atom include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. One alone or two or more kinds of these coupling agents may be used either singly or as combined.

Among the above, bis(3-triethoxysilylpropyl) tetrasulfide is preferred.

The mixing amount of the coupling agent in the rubber composition is, from the viewpoint of reinforcing performance, preferably 1 part by mass or more relative to 100- parts by mass of the inorganic reinforcing agent, more preferably 3 parts by mass or more, even more preferably 5 parts by mass or more. From the viewpoint of reducing components not participating in coupling reaction, the mixing amount is preferably 25 parts by mass or less, more preferably 20 parts by mass or less, even more preferably 15 parts by mass or less.

<Other Component>

In addition to the rubber additive, the dienic rubber, the softener, the hydrophilic fiber, the foaming agent, the reinforcing filler and the coupling agent (in the case where the inorganic reinforcing filler is used) mentioned above, the rubber composition of the present invention may further contain any other compounding agent generally used in rubber compositions. Examples of the compounding agent include a vulcanizing agent such as sulfur; a vulcanization accelerator such as zinc oxide, N-t-butyl-1,2-benzothiazolylsulfenamide (TBBS), N-cyclohexyl-2-benzothiazyl sulfenamide (CBS), mercaptobenzothiazole (MBT), dibenzothiazyl disulfide (MBTS), 1,3-diphenylguanidine (DPG), and tetrakis(2-ethylhexyl)thiuram disulfide (TOT); stearic acid; and an antiaging agent. Any of these compounding agents may be appropriately selected and mixed in the rubber composition within a range not detracting from the object of the present invention. As these components, commercial products are favorably used.

<Method for producing rubber composition>

A method for producing the rubber composition of the present invention is not specifically limited. For example, using a kneading machine such as a Banbury mixer, a roll, or an intensive mixer, the constituent components of the rubber composition may be blended and mixed. From the viewpoint of attaining the advantageous effects of the present invention, the production method for the rubber composition of the present invention preferably includes a step of mixing and kneading a compound represented by the general formula (I).

More specifically, from the viewpoint of suppressing vulcanization in production of the rubber composition and improving the handleability thereof in production, the rubber composition is preferably produced according to a method including a step (first kneading step) of previously mixing and kneading the other components than the vulcanizing agent and the vulcanization accelerator among the constituent components of the rubber composition, followed by a step (second kneading step) of mixing and kneading the vulcanizing agent and the vulcanization accelerator. In this method, vulcanization does not occur in the first kneading step even under high-temperature conditions, and therefore the rubber composition of the present invention can be produced with good productivity.

The kneading temperature in the first kneading step is, from the viewpoint of suppressing thermal decomposition of the constituent components, preferably in such a range that the highest temperature is preferably 250°C or lower, more preferably 200°C or lower, even more preferably 180°C or lower. Also from the viewpoint of productivity, the kneading temperature in the first kneading step is preferably 100°C or higher, more preferably 120°C or higher, even more preferably 140°C or higher.

The kneading temperature in the second kneading step is, from the viewpoint of generation of vulcanization during mixing, preferably in such a range that the highest temperature is preferably 150°C or lower, more preferably 130°C or lower. Also from the viewpoint of productivity, the kneading temperature in the second kneading step is preferably 80°C or higher, more preferably 100°C or higher.

The rubber composition of the present invention can express the effect when used for tires. The rubber composition can be used, for example, in a tread part of tires.

[Tire]

The tire of the present invention is one formed from the rubber composition of the present invention. Specifically, the rubber composition of the present invention can be used for tires, or for tire members. As tire members, the rubber composition is favorably used for a tread and a tread base. More preferably, in the tire of the present invention, the rubber composition is used in a tread part. Also preferably, the tire of the present invention is a winter tire.

A production method for the tire of the present invention is not specifically limited so far as the method includes a step of molding the rubber composition. For example, a pneumatic tire is produced according to an ordinary method using the rubber composition of the present invention. Specifically, in an unvulcanized state, the rubber composition of the present invention is molded through extrusion, for example, into a tread member, and on a tire molding machine, this is stuck and molded according to an ordinary method to give a green tire. The green tire is heated under pressure in a vulcanizing machine to give a tire. The rubber composition of the present invention preferably contains a foaming agent, and in this case, foaming occurs simultaneously with vulcanization.

Regarding the above-mentioned embodiments, the present invention discloses a rubber additive, a rubber composition, a production method for a rubber composition, use of a rubber composition, a tire, a production method for a compound, and use of a compound.

Examples

Hereinunder the present invention is described by Examples, but the present invention is not restricted to the scope of the Examples. In the Examples, analysis of rubber additives, and measurement and evaluation of rubber compositions were carried out according to the methods mentioned below.

[Measurement by $^1$H-NMR]

Structural analysis of the rubber additive 1 (compound (I-I) to be mentioned below) produced in Example was according to $^1$H-NMR measurement.

The rubber additive was dissolved in 0.05 v/v%-TMS (tetramethylsilane)-containing heavy chloroform, and analyzed through $^1$H-NMR using a nuclear magnetic resonator (Agilent 400-MR DD2 System, from Agilent Technology Corporation). The chemical shift value ($\delta$1H) of each peak was based on the TMS signal (0.00 ppm).

Production Example 1 (Production of rubber additive 1)

In a 200-mL four-neck flask equipped with a dropping funnel and a stirring device with a polytetrafluoroethylene (PTFE)-made impeller-attached borosilicate glass rod fitted thereto, 18.8 g (0.150 mol) of 6-methylisocytosine (from Tokyo Chemical Industry Co., Ltd.) and 130 mL of dimethyl sulfoxide were put in a nitrogen stream atmosphere, and heated up to 150°C with mixing. While the mixture was kept at 150°C, 25.6 g (0.165 mol) of isocyanatoethyl methacrylate (from Tokyo Chemical Industry Co., Ltd.) was dropwise added thereto taking 30 minutes, and kept at 150°C for 30 minutes. The resultant reaction liquid was cooled to room temperature and then mixed with 1300 mL of methanol to precipitate a white solid, which was then taken out through filtration. The resultant white solid was a compound represented by the following formula (I-I). Hereinunder the compound (I-1) was used as a rubber additive 1. $^1$H-NMR; 1.93 (3H, following 1), 2.23 (3H, following 9), 3.58 (2H, following 5), 4.27 (2H, following 4), 5.55 (1H, following 3), 5.78 (1H, following 10), 6.18 (1H, following 2), 10.50 (1H, following 6), 11.95 (1H, following 7), 12.97 (1H, following 8)

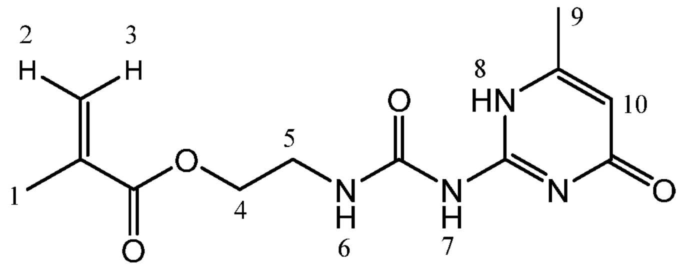

(I-I)

Examples 1 to 3, and Comparative Examples 1 to 5

[Preparation of rubber composition]

According to the formulation shown in Table 1 and using an ordinary Banbury mixer, constituent components were mixed in an order of a first mixing step (first stage) and a final mixing step (final stage) to produce a rubber composition. After the first mixing step, the mixture was once taken out of the Banbury mixer and thereafter the mixture was again put into the Banbury mixer and mixed therein as the final mixing step. The maximum temperature of the mixture in the first mixing step was 170°C, and the maximum temperature of the rubber composition in the final mixing step was 110°C.

Further, the rubber composition produced in the manner as above was analyzed according to the methods mentioned below to measure the storage elastic modulus (E') at -20°C, the loss tangent (tanδ) at -20°C and the on-ice performance thereof. The results are shown in Table 1.

<Measurement of storage elastic modulus (E') and loss tangent (tanδ)>

The storage elastic modulus (E') at -20°C and the loss tangent (tanδ) at -20°C of vulcanized rubber prepared by vulcanizing the rubber composition at 145°C for 33 minutes were measured using a spectrometer from Ueshima Seisakusho Co., Ltd., in the condition of an initial strain of 2%, a dynamic strain of 1% and a frequency of 52 Hz.

Based on the result 100 in Comparative Example 1, a relative value was calculated. Preferably, the storage elastic modulus (E') and loss tangent are on the same level as that in Comparative Example 1, and specifically, E' is preferably 90 or more and 110 or less. Tanδ is preferably 95 or more and 105 or less.

[Production of tire]

The rubber composition prepared as in the above was used as a tread, and test tires (tire size 195/6515) were produced according to an ordinary method. Next, the tires were tested according to the methods mentioned below to evaluate the on-ice performance and the abrasion resistance thereof. The results are shown in Table 1.

<On-ice performance>

Four each of the test tires were mounted on a Japanese car of 1,600 cc displacement, and the braking performance on ice at a freezing temperature of -1°C was observed. Using the test tire of Comparative Example 1 as a control, the on-ice performance was expressed as an index: On-ice performance = (braking distance of test tire of Comparative Example 1 / braking distance of test tire of other Example) × 100. This shows that the larger the index value, the better the on-ice performance.

<Abrasion resistance>

A real car with the test tires was driven for 10,000 km on a paved road, and then the remaining groove was measured. The running distance taken for the tread to wear by 1 mm was relatively compared for exponential expression based on the index 100 of the tire of Comparative Example 1. The larger the index value, the better the abrasion resistance.

Preferably, the abrasion resistance is on the same level as that of the tire of Comparative Example 1, and specifically, the index value is preferably 90 or more, more preferably 95 or more.

Table 1

| | | Example | | | Comparative Example | | | | |
|---|---|---|---|---|---|---|---|---|---|
| | | 1 | 2 | 3 | 1 | 2 | 3 | 4 | 5 |
| First Stage (part by mass) | NR*1 | 50 | 50 | 50 | 50 | 50 | 50 | 50 | 50 |
| | Modified BR*2 | 50 | 50 | 50 | 50 | 50 | 50 | 50 | 50 |
| | CB*3 | 35 | 35 | 35 | 35 | 35 | 25 | 35 | 35 |
| | Silica*4 | 35 | 35 | 35 | 35 | 35 | 25 | 35 | 35 |
| | Si69*5 | 2.8 | 2.8 | 2.8 | 2.8 | 2.8 | 2.8 | 2.8 | 2.8 |
| | Resin*6 | 15 | 15 | 15 | 15 | 15 | 15 | 25 | 15 |
| | Oil*7 | 25 | 25 | 30 | 20 | 20 | 20 | 20 | 30 |
| | Antiaging Agent IPPD*8 | 1.5 | 1.5 | 1.5 | 1.5 | 1.5 | 1.5 | 1.5 | 1.5 |
| | Antiaging Agent TMDQ*9 | 0.3 | 0.3 | 0.3 | 0.3 | 0.3 | 0.3 | 0.3 | 0.3 |
| | Hydrophilic Short Fiber*10 | 2 | 2 | 2 | 2 | 2 | 2 | 2 | 2 |
| | ZnO*11 | 2 | 2 | 2 | 2 | 2 | 2 | 2 | 2 |
| | Stearic Acid | 2 | 2 | 2 | 2 | 2 | 2 | 2 | 2 |
| Final Stage (part by mass) | Rubber Additive 1*12 | 2.5 | 5 | 5 | 0 | 5 | 5 | 5 | 2.5 |
| | Foaming Agent*13 | 3.5 | 3.5 | 3.5 | 3.5 | 3.5 | 3.5 | 3.5 | 3.5 |
| | Sulfur | 1.7 | 1.7 | 1.7 | 1.7 | 1.7 | 1.7 | 1.7 | 1.7 |
| | CBS*14 | 1 | 1 | 1 | 1 | 1 | 1 | 1 | 1 |
| | MBTS*15 | 0.5 | 0.5 | 0.5 | 0.5 | 0.5 | 0.5 | 0.5 | 0.5 |
| Liquid Softener /Compound represented by Formula (I) | | 10 | 5 | 6 | - | 4 | 4 | 4 | 12 |
| Evaluation | On-ice Performance | 110 | 115 | 120 | 100 | 98 | 110 | 110 | 105 |
| | tanδ (-20°C, 1%) | 100 | 95 | 100 | 100 | 90 | 109 | 121 | 100 |
| | E' (-20°C, 1%) | 92 | 105 | 93 | 100 | 120 | 63 | 118 | 80 |
| | Abrasion Resistance | 95 | 105 | 100 | 100 | 100 | 56 | 78 | 87 |

The components in Table 1 are as follows.

*1 NR: Natural rubber (Tg = -60°C)
*2 Modified BR: Modified polybutadiene rubber 1 (modified polybutadiene rubber synthesized according to the method mentioned below, Tg = -110°C)
*3 CB: Carbon black (N134, from Asahi Carbon Co., Ltd., nitrogen adsorption specific surface area ($N_2SA$) = 146 $m^2/g$)
*4 Silica: Product name "Nipsil AQ" from Tosoh Silica Co., Ltd., CTAB specific surface area =150 $m^2/g$, nitrogen adsorption specific surface area ($N_2SA$) = 200 $m^2/g$)
*5 Si69: Silane coupling agent ("Si69" (bis[3-trimethylsilyl)propyl] polysulfide), from Evonic Corporation)
*6 Resin: $C_5$ resin, product name "Escorez 1102", from Tonen Chemical Corporation
*7 Oil: Liquid softener (process oil (naphthenic process oil, product name "Diana Process Oil NS-24", from Idemitsu Kosan Corporation, pour point = -30°C)
*8 Antiaging agent IPPD: Antiaging agent (N-isopropyl-N'-phenyl-p-phenylenediamine)
*9 Antiaging agent TMDQ: Antiaging agent (2,2,4-trimethyl-1,2-dihydroquinoline polymer)
*10 Hydrophilic short fiber: Hydrophilic short fiber produced according to the method mentioned below.
*11 ZnO: Zinc oxide
*12 Rubber additive 1: Rubber additive 1 produced in the above Production Example 1.
*13 Foaming agent: Dinitrosopentamethylenetetramine (DNPT)
*14: CSB: Vulcanization accelerator (N-cyclohexyl-2-benzothiazolylsulfenamide, "Nocceler CZ-G (CZ)", from Ouchi Shinko Chemical Industry Co., Ltd.
*15 MBTS: Vulcanization accelerator (di-2-benzothiazolyl disulfide, "Nocceler DM-P", from Ouchi Shinko Chemical

Industry Co., Ltd.

<Modified polybutadiene rubber 1>

(i) Preparation of catalyst

7.11 g of a cyclohexane solution of butadiene (15.2% by mass), 0.59 mL of a cyclohexane solution of neodymium neodecanoate (0.56 M), 10.32 mL of a toluene solution of methylaluminoxane MAO (PMAO, manufactured by Tosoh Finechem Corporation) (3.23 M as aluminium concentration), and 7.77 mL of a hexane solution of diisobutylaluminum hydride (by Kanto Chemical Co., Inc.) (0.90 M) were, in that order, put into a dried, nitrogen-purged, 100-mL glass bottle with a rubber stopper, and ripened at room temperature for 2 minutes, and then 1.45 mL of a hexane solution of diethylaluminum chloride (by Kanto Chemical Co., Inc.) (0.95 M) was added thereto and ripened for 15 minutes at room temperature with intermittently stirring. The neodymium concentration in the thus-obtained catalyst solution was 0.011 M (mol/liter).

(ii) Production of modified dienic rubber modified at the active terminal

A glass bottle with a rubber stopper, having a volume of 900 mL, was dried and purged with nitrogen, and a cyclohexane solution of dried and purified butadiene and dry cyclohexane were put thereinto to provide a condition where 400 g of a cyclohexane solution of 12.5% by mass butadiene was kept in the bottle. Next, 2.28 ml (0.025 mmol as neodymium) of the catalyst solution prepared above was put into the bottle, and polymerization was carried out in a warm water bath at 50°C for 1.0 hour.

(iii) Primary modification

As a primary modifier, a hexane solution of 3-glycidoxypropyltrimethoxysilane (1.0 M) was added in a ratio of 23.5 (as a molar equivalent relative to neodymium) to perform modification at 50°C for 60 minutes.

(iv) After-treatment

Subsequently, as a polyalcohol carboxylate ester, 1.2 mL of sorbitan trioleate alone was added for further modification at 50°C for 1 hour, and then 2 mL of a 5% isopropanol solution of an antiaging agent, 2,2'-methylene-bis(4-ethyl-6-t-butyl phenol) (NS-5) was added to stop the reaction, and further, the reaction liquid was re-precipitated in isopropanol containing a minor amount of NS-5, and then dried in a drum to give a polybutadiene rubber modified at the active terminal. The resultant modified polybutadiene rubber 1 has a glass transition temperature of -110°C.

<Hydrophilic short fiber>

Using two twin-screw extruders according to Production Example 3 disclosed in JP 2012-219245 A, 40 parts by mass of a polyethylene [Novatec HJ360 (MFR 5.5, melting point 132°C) from Japan Polyethylene Corporation] and 40 parts by mass of an ethylene-vinyl alcohol copolymer [Eval F104B (MFR 4.4, melting point 183°C) from Kuraray Corporation] were put into a hopper, and simultaneously extruded out through a die outlet, and the resulting fiber was cut into a length of 2 mm according to an ordinary method to product a hydrophilic short fiber coated with a coating layer of polyethylene.

As in the results in Table 1, the rubber compositions of Examples containing a compound of the formula (I), a dienic rubber and a liquid softener, in which the mixing ratio of the liquid softener to the compound represented by the formula (I) falls within a specific ratio, had excellent on-ice performance without detraction of other characteristics such as tan$\delta$, E' and abrasion resistance. On the other hand, in Comparative Example 1 not containing a compound represented by the formula (I), excellent on-ice performance could not be secured. As in Comparative Examples 2 to 5 where the mixing ration of the liquid softener to the compound represented by the formula (I) falls outside the scope of the present invention, the other properties were not good though excellent on-ice performance could be attained.

Industrial Applicability

The rubber composition of the present invention is useful as a tread rubber for tires, especially for winter tires. Also the tire of the present invention is excellent in on-ice performance and is especially favorable as a winter tire.

**Claims**

1. A rubber composition comprising a compound represented by the following formula (I), a dienic rubber and a liquid softener, wherein the mixing ratio (by mass) of the liquid softener to the compound represented by the formula (I) is 4.5/1 to 11/1:

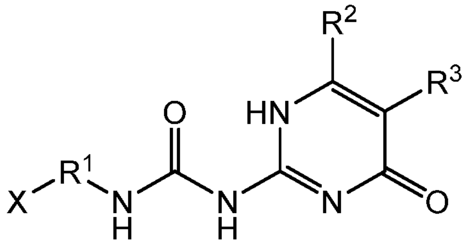

(I)

wherein $R^1$ represents a divalent hydrocarbon group having 1 or more and 20 or less carbon atoms; $R^2$ and $R^3$ each independently represent a hydrogen atom or a hydrocarbon group having 1 or more and 6 or less carbon atoms; X represents a hydrogen atom, or a group represented by $R^4$-COO-, $R^4$-CONH- or $R^4$-O-: and $R^4$ represents a hydrocarbon group having 1 or more and 20 or less carbon atoms.

2. The rubber composition according to claim 1, wherein, in the formula (I), $R^1$ is at least one selected from the group consisting of a linear or branched alkylene group and a linear or branched alkenylene group having 1 or more and 20 or less carbon atoms.

3. The rubber composition according to claim 1 or 2, wherein, in the formula (I), $R^2$ is an alkyl group having 1 or more and 6 or less carbon atoms, and $R^3$ is a hydrogen atom.

4. The rubber composition according to any one of claims 1 to 3, wherein, in the formula (I), X is a group represented by $R^4$-COO-.

5. The rubber composition according to any one of claims 1 to 4, wherein $R^4$ is a hydrocarbon group having 2 or more and 20 or less carbon atoms and having 1 or more polymerizing unsaturated bonds.

6. The rubber composition according to any one of claims 1 to 5, wherein the dienic rubber contains a natural rubber.

7. The rubber composition according to any one of claims 1 to 6, wherein the dienic rubber contains a modified polybutadiene rubber.

8. The rubber composition according to any one of claims 1 to 7, further comprising at least one selected from a $C_5$ resin, a $C_5$-$C_9$ resin, and a $C_9$ resin.

9. The rubber composition according to any one of claims 1 to 8, wherein the liquid softener contains an oil.

10. The rubber composition according to any one of claims 1 to 9, further comprising a hydrophilic short fiber.

11. The rubber composition according to any one of claims 1 to 10, further comprising a foaming agent.

12. The rubber composition according to any one of claims 1 to 11, further comprising a reinforcing filler.

13. A tire formed from a rubber composition of any one of claims 1 to 12.

14. The tire according to claim 13, which is a winter tire.

15. The tire according to claim 13 or 14, wherein the rubber composition is used in a tread part.

16. A method for producing a tire of any one of claims 13 to 15, comprising a step of molding the rubber composition.

## INTERNATIONAL SEARCH REPORT

International application No.
PCT/JP2018/035402

A. CLASSIFICATION OF SUBJECT MATTER
Int.Cl. C08L7/00(2006.01)i, B60C1/00(2006.01)i, C08K5/3462(2006.01)i, C08L9/00(2006.01)i

According to International Patent Classification (IPC) or to both national classification and IPC

B. FIELDS SEARCHED

Minimum documentation searched (classification system followed by classification symbols)
Int.Cl. C08L7/00, B60C1/00, C08K5/3462, C08L9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2013-525562 A (ARKEMA FRANCE) 20 June 2013, claims, etc. & US 2013/0210972 A1, claims & CN 102858864 A | 1-16 |
| A | JP 2010-185025 A (YOKOHAMA RUBBER CO., LTD.) 26 August 2010, claims, etc. (Family: none) | 1-16 |
| A | JP 2009-286897 A (YOKOHAMA RUBBER CO., LTD.) 10 December 2009, claims, etc. (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12.11.2018 | 11.12.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/035402

C (Continuation). DOCUMENTS CONSIDERED TO BE RELEVANT

| Category* | Citation of document, with indication, where appropriate, of the relevant passages | Relevant to claim No. |
|---|---|---|
| P, A | WO 2017/217528 A1 (BRIDGESTONE CORPORATION) 21 December 2017, claims, etc. (Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012503060 A
- JP 2013530299 A
- JP 2013531726 A
- JP 2013531727 A
- WO 2003046020 A
- JP 2007217562 A
- JP 2004513987 A
- JP 11029603 A
- JP 2003113202 A
- JP 6029338 A
- JP 2003534426 A
- JP 2002201310 A
- WO 2006069792 A
- WO 2006069793 A
- JP 2012219245 A